# EUROPÄISCHE PATENTSCHRIFT

(11) **EP 0 785 742 B1**
(45) Veröffentlichungstag und Bekanntmachung des Hinweises auf die Patenterteilung: **05.08.1998**
(21) Anmeldenummer: 95935904.3
(22) Anmeldetag: 05.10.1995
(51) Int. Cl.: A47J 43/07

(54) **ARBEITSGERÄT ZUM RÜHREN ODER ZERKLEINERN VON NAHRUNGSMITTELN**
FOODSTUFF MIXER OR GRINDER
MELANGEUR OU BROYEUR DE DENREES ALIMENTAIRES

(30) Priorität: 10.10.1994 DE 4436092
(43) Veröffentlichungstag der Anmeldung: 30.07.1997
(73) Patentinhaber: Braun Aktiengesellschaft, Frankfurt am Main (DE)
(72) Erfinder: SAFONT, Vicente, 08039 Montgat (Barcelona) (ES); PENARANDA, Mariano, 08005 Barcelona (ES); HERNANDEZ, Alejandro, 43710 Santa Oliva (Tarragona) (ES); GOLOB, Jürgen, 61381 Friedrichsdorf (DE)
(86) Internationale Anmeldenummer: EP9503932
(87) Internationale Veröffentlichungsnummer: WO9610944

(56) Entgegenhaltungen:
- EP-A- 0 529 287
- DE-B- 1 242 817
- DE-B- 1 245 058
- US-A- 3 117 769

## Beschreibung

Die vorliegende Erfindung bezieht sich auf ein Arbeitsgerät zum Rühren oder Zerkleinern von Nahrungsmitteln gemäß dem Oberbegriff des Anspruchs 1.

Ein Arbeitsgerät dieser Art für eine elektrische Küchenmaschine ist aus der EP-A2 O 529 287 (Fig. 4) bekannt, das in Verbindung mit einem Antriebsteil (Motorgehäuse) auch als sogenannter "Stabmixer" bezeichnet wird. Dieses Arbeitsgerät besitzt ein langgestrecktes, rohrförmiges Gehäuseteil, in dem eine Antriebswelle mit Abstand zu den Wänden des Gehäuses geführt ist. Diese Antriebswelle ist an ihrem antriebsseitigen und abtriebsseitigen Ende jeweils gelagert, wobei das Arbeitsgerät mit der Antriebseinheit zu einem Hand- oder Stabmixer verbindbar ist.

An dem unteren, im Bereich des Abtriebsendes der Welle befindlichen Gehäuseende ist daran einstückig eine Gehäuseglocke angeordnet, die eine solche Querschnittsabmessung senkrecht zu der Achse der Antriebswelle aufweist, daß dort ein Messer aufgenommen werden kann. Die Gehäuseglocke ist zu dem rohrförmigen Gehäuseteil hin mittels eines Deckels oder einer Abdeckplatte abgedeckt, die auf ihrer zu dem rohrförmigen Gehäuse hin weisenden Seite eine Halterung für eine Rollmembran aufweist, die eine Abdichtung der Antriebswelle gegenüber dem rohrförmigen Gehäuseteil herstellt. Weiterhin ist in dem Übergangsbereich zwischen der Gehäuseglocke und dem rohrförmigen Gehäuseteil bzw. Wellengehäuse eine Lagerhülse gehalten, die an diesem Ende die Arbeitswelle lagert. Die Lagerung der Lagerhülse erfolgt über ein weiteres Lagerteil, das beispielsweise ein Gummilagerteil sein kann, das radiale Schwingungen der Arbeitswelle in diesem Bereich auffängt.

Da mit dem Arbeitsgerät, wie es aus der vorstehend angegebenen EP-A2 O 529 287 bekannt ist, in Verbindung mit einem Antriebsteil Nahrungsmittel zerkleinert, püriert oder gemixt werden, die die unterschiedlichste Konsistenz von fest über zähfließend bis flüssig aufweisen können, ist es zum einen wesentlich, daß Teile, die mit den Nahrungsmitteln in Berührung kommen, in einfacher Weise reinigbar sind, zum anderen soll eine hohe Dichtigkeit von der Gehäuseglocke zu dem Wellengehäuse hin gegeben sein, wozu gerade die vorstehend erwähnte Abdeckplatte vorgesehen ist, die den gesamten Querschnitt der Gehäuseglocke zu dem Wellengehäuse hin abschließt.

Ein Arbeitsgerät, wie es in der EP-A2 O 529 287 beschrieben ist, hat sich im Einsatz gut bewährt. Insbesondere wird durch die einzelnen Teile, wie die Abdeckplatte und die Lagerteile, gewährleistet, daß zum einen die Welle in dem Bereich des Übergangs zwischen Gehäuseglocke und Wellengehäuse elastisch gelagert wird, zum anderen wird das Lager durch die Abdeckplatte geschützt. Wenn das Arbeitsgerät nach jedem Gebrauch von Nahrungsresten gereinigt wird, dürfen die Innenräume des Arbeitsgeräts sowie insbesondere die Lager weder naß noch schmutzig werden.

Der vorliegenden Erfindung liegt nun die Aufgabe zugrunde, das Arbeitsgerät eines Stabmixers derart weiterzubilden, daß im Übergangsbereich zwischen der Gehäuseglocke und dem Wellengehäuse eine zuverlässige Flüssigkeitsabdichtung erreicht wird, die Arbeitswelle an ihrem Abtriebsende schwingend gelagert wird und die auftretenden radialen Auslenkungen aufgenommen werden, ohne daß die Dichteigenschaften beeinträchtigt werden. Bei dieser Anordnung sollen insbesondere auch die Montage vereinfacht und die Herstellkosten reduziert werden.

Die vorstehende Aufgabe wird bei einem gattungsgemäßen Arbeitsgerät durch die kennzeichnenden Merkmale des Anspruchs 1 gelöst.

Das eingesetzte Dichtungsteil lagert zum einen die Welle, indem es die Lagerhülse elastisch zentriert. Weiterhin umfaßt es einen Dichtring, der die Abdeckplatte an ihrem Umfangsbereich gegen die Gehäuseglocke abdeckt. Es ist somit nur dieses zusammenhängende Dichtungsteil notwendig, um alle erforderlichen Dicht- und Lageraufgaben im Bereich des Übergangs zwischen der Gehäuseglocke und dem Wellengehäuse zu erreichen. Durch das räumlich ausgedehnte, einteilige Dichtungsteil wird ein stabiles, aber dennoch elastisches Gebilde erhalten, was sich bei weniger Bauteilen dennoch einfach montieren läßt und was sich insbesondere bei der Serienherstellung vorteilhaft auswirkt. Dabei ist keine diffizile Montage einzelner Teile, wie beispielsweise ein elastisches Lager und ein davon getrennter O-Ring, erforderlich, sondern das Dichtungsteil wird als Gesamtbauteil dem Gehäuse entnommen und in dieses unlösbar eingesetzt.

Um eine stabile Verbindung zwischen dem Dichtungsring und demjenigen Bereich des Dichtungsteils zu erhalten, das die Lagerhülse der Arbeitswelle aufnimmt, werden vorzugsweise das Dichtungsteil und der umlaufende Dichtungsring über ein scheibenförmiges Dichtungselement miteinander verbunden (Anspruch 2). Gleichzeitig übernimmt dieses scheibenförmige Dichtungselement, über seine Verbindung zu dem außenliegenden, zwischen der Abdeckplatte und der Gehäuseglocke verankerten Dichtungsring, die Aufgabe, die durch radiale Auslenkungen der Arbeitswelle hervorgerufenen Kräfte über einen sehr großen, flächigen Bereich nach außen abzufangen.

Die Verbindungsstege gemäß den Merkmalen des Anspruchs 4 bringen den Vorteil mit sich, daß sie in entsprechende Nuten an dem Wellengehäuse und/oder an der Gehäuseglocke eingreifen können, wodurch eine Zentrierung und eine sichere Lagerung des gesamten Dichtungsteils in der Gehäuseglocke und dem Wellengehäuse ermöglicht wird.

Durch die Merkmale des Anspruchs 5 wird der gesamte Aufbau weiterhin stabilisiert. In dieser Anordnung verspannt beim Einsetzen bzw. beim Anpreisen der Abdeckplatte, nachdem die Dichtung über die Arbeitswelle aufgeschoben und in das Wellengehäuse eingesetzt ist, der Fortsatz der Abdeckplatte in einfacher Weise das die Arbeitswelle aufnehmende Sinterlager, der in den rohrförmigen Abschnitten der Dichtung gelagert ist, gegen den Innenumfang des Wellengehäuses.

Um eine zusätzliche Zentrier- und Lagerhilfe zu bilden, sind die Merkmale des Anspruchs 6 vorgesehen. Auf diese Weise wird insbesondere im Bereich des Dichtungselements eine in Umfangsrichtung festgelegte, zentrierte Anordnung des Dichtungselements erzielt.

Vorzugweise wird als äußeres Dichtungselement, das sich zwischen der Abdeckplatte und der Gehäuseglocke einlegt, eine umlaufende O-Ringdichtung eingesetzt (Anspruch 7), bevorzugt eine solche O-Ringdichtung, die an ihrer der Abdeckplatte abgewandten Seite eine umlaufende Nut aufweist (Anspruch 8), so daß eine erhöhte Flexibilität der Dichtung in radialer Richtung zu der Arbeitswelle erreicht wird. Damit eine solche O-Ringdichtung weiterhin zentriert ist, liegt sie in einer umlaufenden Gehäusenut der Gehäuseglocke ein (Anspruch 9).

In einer weiteren Ausgestaltung des Arbeitsgeräts (nach Anspruch 10) hält das Dichtungsteil der Dichtung in axialer Richtung der Welle zentriert die Lagerhülse, so daß diese Lagerhülse beim Herausnehmen der Dichtung aus dem Arbeitsgerät, beispielsweise zu Reinigungszwecken, in der Dichtung verbleibt.

Um einerseits eine gute Zentrierung der Lagerhülse und damit der Arbeitswelle in dem Wellengehäuse zu erreichen, und andererseits die Dichtung in diesem Bereich so elastisch auszubilden, daß sie radiale Auslenkbewegungen der Arbeitswelle aufnimmt, sind die Merkmale des Anspruchs 11 vorgesehen. In dieser Anordnung werden folglich zwischen den einzelnen radialen Stegen des Dichtungsteils Freiräume gebildet, im Bereich derer sich die Stege unter radialer Schwingung der Arbeitswelle ausdehnen können.

Bevorzugt wird die Dichtung als einstückiges Teil aus einem Polyester-Elastomer gebildet, mit dem eine ausreichende, dauerhafte Elastizität und Abdichtung gewährleistet ist und das andererseits unproblematisch im Hinblick auf Nahrungsmittel ist.

Weitere Einzelheiten und Merkmale dieses erfindungsgemäßen Arbeitsgeräts ergeben sich aus der nachfolgenden Beschreibung eines Ausführungsbeispiels in Form eines Stabmixers anhand der Zeichnung. In der Zeichnung zeigt:
- Fig. 1: einen Längsschnitt durch das Arbeitsgerät im Bereich des unteren Endes eines Wellengehäuses und einer sich daran anschließenden Gehäuseglocke;
- Fig. 2: einen Schnitt entlang der Schnittlinie II-II in Figur 1;
- Fig. 3: einen Schnitt entlang der Schnittlinie III-III in Figur 1 und
- Fig. 4: eine Vergrößerung des Ausschnitts, der in Figur 1 mit IV gekennzeichnet ist.

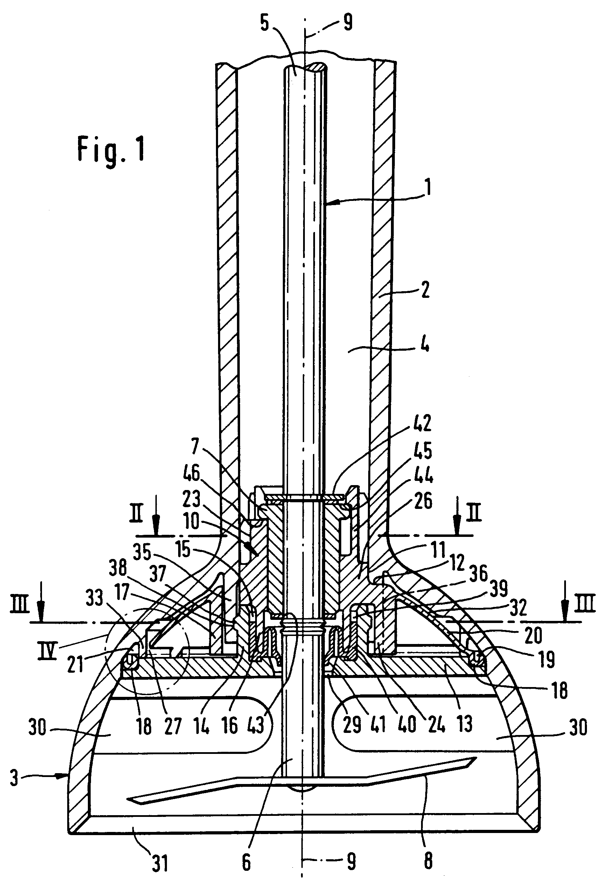

Das Arbeitsgerät, wie es im Längsschnitt in Figur 1 dargestellt ist, weist eine Arbeitswelle 1 auf, die durch ein Wellengehäuse 2 verläuft, an dessen unterem Ende sich eine Gehäuseglocke 3 anschließt. Der Innendurchmesser des Wellengehäuses 2 ist derart dimensioniert, daß zwischen der Arbeitswelle 1 und dem Innenumfang des Wellengehäuses 2 ein freier Raum 4 verbleibt.

Die Arbeitswelle 1 ist sowohl an ihrem Antriebsende 5 als auch an ihrem Abtriebsende 6 in einer Lagerhülse (Sinterlager) 7 gelagert, die aus Metall gefertigt ist. Das obere, an dem Antriebsende 5 befindliche Lager ist in den Figuren nicht dargestellt. Weiterhin kann das Wellengehäuse 2 bzw. die Arbeitswelle 1 an ihrem Antriebsende 5 mit einer Antriebseinheit verbunden werden und bildet so einen kompakten Stabmixer, wie er seit Jahren von der Anmelderin selbst vertrieben wird.

An dem abtriebsseitigen Ende 6 der Arbeitswelle 1 ist ein Messer 8 angeschraubt, verstemmt oder in anderer Weise formschlüssig direkt befestigt, das sich mit der Arbeitswelle 1 in der Gehäuseglocke 3 um die Achse 9 drehen kann, wobei dieses Messer 8 in radialer Richtung geschützt durch die Gehäuseglocke 3 umschlossen ist, die umfangsseitig, horizontal verlaufende Schlitze 30 aufweist. Die Schlitze 30 sorgen beim Bearbeiten von Nahrungsmitteln dafür, daß diese aus den Schlitzen 30 heraustransportiert und von unten her über die Öffnung 31 der Gehäuseglocke 3 wieder angesaugt werden.

Die Lagerhülse 7 ist in einem Lager- bzw. Dichtungsteil 10 klemmend gehalten, das sich über seinen oberen Abschnitt 26 an dem Ende des Wellengehäuses 2 im Bereich des Übergangs zu der Gehäuseglocke 3 sowohl in radialer Richtung als auch in axialer Richtung durch eine Anlagefläche 11 bzw. eine Schulterfläche 12 abstützt.

Die Gehäuseglocke 3 wird, in Richtung der Achse 9 gesehen, in der Mitte ihrer Erstreckung, aber oberhalb der Schlitze 30, mit einer Abdeckplatte 13 verschlossen. Die Abdeckplatte 13 weist an ihrer Innenseite, d.h. auf ihrer zu dem Wellengehäuse 2 hin weisenden Seite, einen rohrförmigen Fortsatz 14 auf, der sich in einen Zwischenraum 15 hinein erstreckt, der zwischen einem inneren Abschnitt 16 des Lagerteils 10 und einem äußeren rohrförmigen Abschnitt 17 des Lagerteils 10 gebildet ist. Beide Abschnitte 16, 17 verlaufen konzentrisch zueinander. Der Fortsatz 14 weist an seiner Außenfläche Vorsprünge 37 auf, die zur Befestigung der Abdeckplatte 13 in an den Enden 35 ausgebildeten Vertiefungen 38 rastend eingreifen. Zwischen dem Abschnitt 16 und dem Fortsatz 14 ist ein weiterer Ringraum 39 ausgebildet, in den das Ende eines radialen Wellendichtrings 40 eingepreßt ist, wobei dieser aus einer Rollmembran besteht, an deren anderen Enden die Dichtlippe 41 ausgebildet ist, die dichtend am Antriebsende 6 anliegt. Die Dichtung 10 dient somit als Lager- und Dichtungsteil. Die Abdeckplatte 13 wird von dem Abtriebsende 6 der Welle 1 über eine Bohrung 29 durchdrungen.

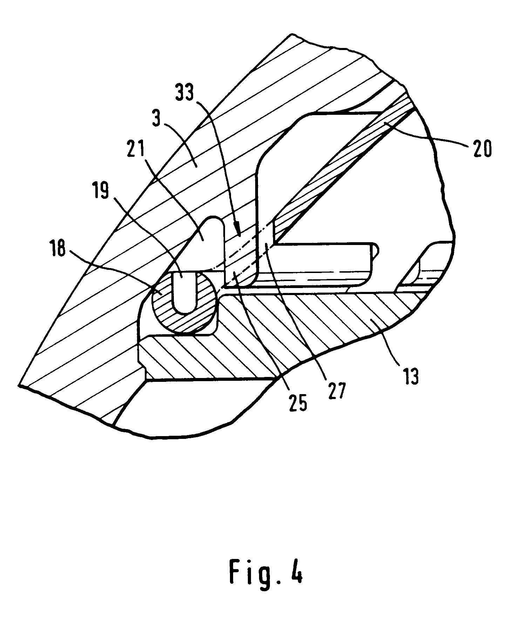

Weiterhin ist zwischen dem äußeren Umfang der Abdeckplatte 13 und der Gehäuseglocke 3 eine O-Ringdichtung 18 eingesetzt. Die Anordnung zwischen der Abdeckplatte 13 und der Innenwand der Gehäuseglocke 3 ist entsprechend dem Ausschnitt IV in Fig. 1 vergrößert in Figur 4 dargestellt. Diese O-Ringdichtung 18 ist an ihrer Oberseite, d.h. auf ihrer zu dem Wellengehäuse 2 hin weisenden Seite, mit einer umlaufenden Dichtungsnut 19 versehen, die die Elastizität der O-Ringdichtung 18 in radialer Richtung erhöht.

Wie sowohl in der Figur 1 als auch in der Ausschnittsdarstellung der Figur 4 zu sehen ist, ist die umlaufende O-Ringdichtung 18 mit dem die Lagerhülse 7 aufnehmenden Lagerteil 10 der Dichtung über ein glockenförmiges Dichtungselement 20 derart verbunden, daß das Lager- bzw. Dichtungsteil 10, dieses glockenförmige Dichtungselement 20, die O-Ringdichtung 18 sowie die rohrförmigen Abschnitte 16 und 17 der Abdeckplatte eine einteilige Dichtung bzw. einseitiges Lagerteil 32 bilden, die sowohl die Arbeitswelle 1 bzw. die Lagerhülse 7 lagern als auch die Lagerhülse 7, das Wellengehäuse 2, die Gehäuseglocke 3 und die Abdeckplatte 13 gegeneinander an verschiedenen Stellen abdichten.

Wie wiederum die Figur 4 deutlich zeigt, wird die O-Ringdichtung 18 nach dem Einsatz der Abdeckplatte 13 in eine am Innenumfang der Gehäuseglocke 3 umlaufenden Gehäusenut 21 hineingedrückt, wobei sie sich aufgrund der umlaufenden Dichtungsnut 19 insbesondere in radialer Richtung als auch in axialer Richtung verformt und sich somit dichtend zwischen der Gehäuseglocke 3 und der Abdeckplatte 13 anlegen kann. Dabei verkleinert sich der Raum der Dichtungsnut 19, was aber in Figur 4 nicht zu erkennen ist.

Aufgrund des glockenförmigen Abschnitts des Dichtungselements 20 zwischen der O-Ringdichtung 18 und dem Lager- bzw. Dichtungsteil 10 wird eine von dem äußeren Umfang der Abdeckplatte 13 zu der Lagerhülse 7, die die Arbeitswelle 1 lagert, im wesentlichen geschlossene Dichtung 32 erhalten, die lediglich von am Umfang der Gehäuseglocke 3 nach unten gerichteten Stützpfosten 33 über Schlitze 27 unterbrochen ist. Die Stützpfosten 33 dienen als Anschlag für die Abdeckplatte 13 bei der automatischen Montage (Figur 4).

In Fig. 1 ist die Lagerhülse 7 über zwei Sicherungsringe 42, 43 axial fest auf der Arbeitswelle 1 befestigt. Der obere Abschnitt 26 weist am Umfang gleichmäßig verteilte Haken 44 auf, die die Stirnseite 45 der Lagerhülse 7 hintergreifen, um so das Teil 10 axial fest mit der Lagerhülse 7 zu verbinden. Dabei schlagen die Enden der Stege 23 an der Stirnfläche 46 der Lagerhülse 7 an. An dem Außenumfang der Haken 44 sind Rillen 47 ausgebildet, die eine elastische Lagerung des Teils 10 und somit der Lagerhülse 7 in radialer Richtung im Wellengehäuse ermöglichen.

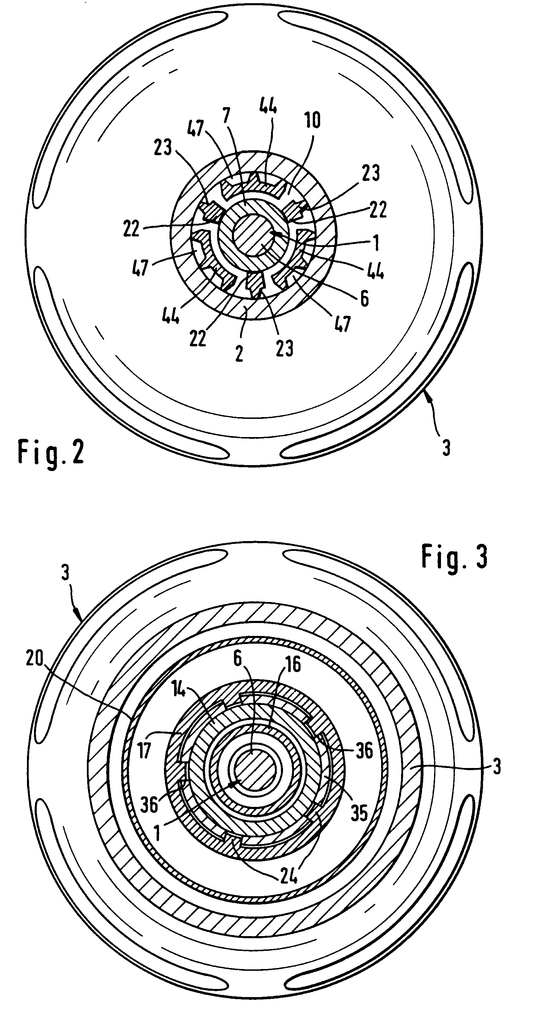

Wie die Figur 2 verdeutlicht, die einen Schnitt entlang der Schnittlinie II-II in Figur 1 im Bereich des Endes des Wellengehäuses 2 durch die Lagerhülse 7 zeigt, wird die Lagerhülse 7 in dem unteren Bereich des Dichtungsteils 10 flächig gehalten, während im oberen Bereich 3 radial innenliegende Stege 22 anliegen. Auf der Außenseite dieses Dichtungsteils 10 sind ebenfalls, um den Umfang gleichmäßig verteilt, sich axial erstreckende Stege 23 gebildet, die an der Innenwand des Wellengehäuses 2 anliegen.

Wie die Schnittdarstellung der Figur 3 zeigt, wird der rohrförmige Fortsatz 14 der Abdeckplatte 13 ebenfalls über Stege 24 an dem äußeren, rohrförmigen Abschnitt 17 des Dichtungsteils 10 geführt. Durch diese Ausgestaltung der einzelnen Teile mit den Stegen 22, 23 und 24, insbesondere durch die Stege 24 an dem äußeren, rohrförmigen Abschnitt 17, wird eine hohe Elastizität und Nachgiebigkeit der Anordnung erreicht, insbesondere um die Abdeckplatte 13 mit ihrem rohrförmigen Fortsatz 14 zu befestigen bzw. wieder herausziehen zu können. Wie die Figur 1 zeigt, verspannen sich die einzelnen ineinandergeschobenen, rohrförmigen Teile der Dichtung derart, daß eine gute, gedämpfte Lagerung der Lagerhülse 7 und der Antriebswelle 1 erzielt wird.

Wie anhand der Schnittdarstellung der Figuren 1 und 3 deutlich wird, ist das in die Gehäuseglocke 3 hineinreichende Ende 35 des Wellengehäuses 2 in axialer Richtung geschlitzt, wobei in diese Schlitze 36, vorzugsweise vier bis sechs Schlitze, Stege 24 des Abschnitts 17 eingreifen, die das Lager- bzw. Dichtungsteil 10 mit dem Ende 35 des Wellengehäuses 2 drehbar verbinden, wie aufgrund der unterschiedlich dargestellten linken und rechten Hälfte der Figur 1 im Bereich des Endes des Wellengehäuses 2 zu erkennen ist.

## Patentansprüche

1. Arbeitsgerät zum Rühren oder Zerkleinern von Nahrungsmitteln mit einer Arbeitswelle (1), die in einem Wellengehäuse (2) im Bereich ihres Antriebsendes (5) gelagert und mit einem Antriebsmotor einer Küchenmaschine kuppelbar ist und die im Bereich ihres Abtriebsendes (6) zentrisch in einer Lagerhülse (7) gelagert ist und an deren Abtriebsende (6) ein Arbeitsteil (8) befestigt ist, wobei das Wellengehäuse (2) im Bereich des Abtriebsendes (6) der Welle (1) in eine erweiterte Gehäuseglocke (3) übergeht, deren Innenraum zu dem Innenraum des Wellengehäuses (2) hin durch eine Abdeckplatte (13) getrennt ist, die nach außen von dem Abtriebsende (6) über eine Bohrung (29) durchdrungen wird, und wobei die Lagerhülse (7) in ein elastisches, die Welle (1) lagerndes Dichtungsteil (10) eingesetzt ist, das sich an dem Wellengehäuse (2) abstützt,
**dadurch gekennzeichnet**,
daß zwischen dem äußeren Umfangsbereich der Abdeckplatte (13) und der Gehäuseglocke (3) ein umlaufender Dichtring (18) angeordnet ist, der einstückig mit dem Dichtungsteil (10) ausgebildet ist, wobei die aus dem Dichtungsteil (10) und dem Dichtring (18) gebildete Dichtung (32) die Lagerhülse (7) elastisch zentriert.

2. Arbeitsgerät nach Anspruch 1,
**dadurch gekennzeichnet**,
daß das Dichtungsteil (10) und der umlaufende Dichtungsring (18) über ein glockenförmiges Dichtungselement (20) miteinander verbunden sind.

3. Arbeitsgerät nach Anspruch 2,
**dadurch gekennzeichnet**,
daß an dem glockenförmigen Dichtungselement (20) Schlitze (26, 27) ausgebildet sind.

4. Arbeitsgerät nach Anspruch 3,
**dadurch gekennzeichnet**,
daß in die Schlitze (26) Enden (35) des Wellengehäuses (2) und in die Schlitze (27) Stützpfosten (33) eingreifen.

5. Arbeitsgerät nach Anspruch 1,
**dadurch gekennzeichnet**,
daß die Abdeckplatte (13) auf ihrer Innenseite einen rohrförmigen Fortsatz (14) aufweist, der in einen Zwischenraum zwischen zwei rohrförmigen Abschnitten (16, 17) der Dichtung (32) eingreift.

6. Arbeitsgerät nach Anspruch 4,
**dadurch gekennzeichnet**,
daß die Stützpfosten (33) als Anschlag für die Anschlagplatte (13) dienen.

7. Arbeitsgerät nach Anspruch 1,
**dadurch gekennzeichnet**,
daß der umlaufende Dichtungsring eine O-Ringdichtung (18) ist.

8. Arbeitsgerät nach Anspruch 7,
**dadurch gekennzeichnet**,
daß die O-Ringdichtung (18) auf ihrer der Abdeckplatte (13) abgewandten Seite eine umlaufende Dichtungsnut (19) aufweist.

9. Arbeitsgerät nach Anspruch 7 oder 8,
**dadurch gekennzeichnet**,
daß die O-Ringdichtung (18) in einer umlaufenden Gehäusenut (21) der Gehäuseglocke (3) einliegt.

10. Arbeitsgerät nach Anspruch 1,
**dadurch gekennzeichnet**,
daß das Dichtungsteil (10) in axialer Richtung der Welle (1) zentriert die Lagerhülse (7) klemmend hält

11. Arbeitsgerät nach Anspruch 1,
**dadurch gekennzeichnet**,
daß das Dichtungsteil (10) auf seiner Außenseite im Bereich der Lagerhülse (7) sich axial erstreckende Stege (23) aufweist, die an der Innenseite des Wellengehäuses (2) anliegen.

12. Arbeitsgerät nach Anspruch 1,
**dadurch gekennzeichnet**,
daß die Dichtung (32) aus einem Polyester-Elastomer gebildet ist.

## Claims

1. A processing tool for mixing or comminuting food materials, with a working shaft (1) which in the area of its input end (5) is carried in a shaft housing (2) and is adapted to be coupled to a drive motor of a kitchen appliance, and which in the area of its output end (6) is centrally carried in a bearing sleeve (7), said output end (6) having secured to it a work performing element (8), with the shaft housing (2) merging in the area of the output end (6) of the shaft (1) into a flared bell-shaped housing (3) whose inner space is separated from the inner space of the shaft housing (2) by a cover plate (13) through which the output end (6) extends outwardly by passing through a bore (29), said bearing sleeve (7) being inserted in an elastic sealing part (10) that carries the shaft (1) and takes support upon the shaft housing (2),
**characterized in that** a circumferential sealing ring (18) formed integrally with the sealing part (10) is arranged between the outer circumferential area of the cover plate (13) and the bell-shaped housing (3), with the seal structure (32) formed of the sealing part (10) and the sealing ring (18) operating to center the bearing sleeve (7) elastically.

2. The processing tool as claimed in claim 1,
**characterized in that** the sealing part (10) and the circumferential sealing ring (18) are joined together by means of a bell-shaped sealing element (20).

3. The processing tool as claimed in claim 2,
**characterized in that** slots (26, 27) are formed in the bell-shaped sealing element (20).

4. The processing tool as claimed in claim 3,
**characterized in that** ends (35) of the shaft housing (2) engage the slots (26), and support posts (33) engage the slots (27).

5. The processing tool as claimed in claim 1,
**characterized in that** the cover plate (13) has on its inside a tubular extension (14) engaging within a space between two tubular sections (16, 17) of the seal structure (32).

6. The processing tool as claimed in claim 4,
**characterized in that** the support posts (33) serve as stops for the cover plate (13).

7. The processing tool as claimed in claim 1,
**characterized in that** the circumferential sealing ring is an O-ring seal (18).

8. The processing tool as claimed in claim 7,
**characterized in that** the O-ring seal (18) has a circumferential sealing groove (19) on its side facing away from the cover plate (13).

9. The processing tool as claimed in claim 7 or 8,
**characterized in that** the O-ring seal (18) is resident within a circumferential groove (21) of the bell-shaped housing (3).

10. The processing tool as claimed in claim 1,
**characterized in that** the sealing part (10) clampingly holds the bearing sleeve (7) centered in an axial direction of the shaft (1).

11. The processing tool as claimed in claim 1,
**characterized in that** the sealing part (10) includes on its outside in the area of the bearing sleeve (7) axially extending bars (23) resting against the inside of the shaft housing (2).

12. The processing tool as claimed in claim 1,
**characterized in that** the seal structure (32) is made of a polyester elastomer.

## Revendications

1. Accessoire de travail destiné à mélanger ou à broyer des denrées alimentaires, comportant un arbre de travail (1) qui est monté dans un boîtier d'arbre (2) dans la région de son extrémité motrice (5) et qui est susceptible d'être accouplé au moteur d'entraînement d'un robot ménager et qui est monté de manière centrée dans une douille de montage (7) dans la région de son extrémité menée (6) sur laquelle est fixé un élément de travail (8), le boîtier d'arbre (2) se transformant dans la région de l'extrémité menée (6) de l'arbre (1) en un boîtier évasé en forme de cloche (3) dont l'espace intérieur est séparé de l'espace intérieur du boîtier d'arbre (2) par une plaque de recouvrement (13) qui est traversée vers l'extérieur par l'extrémité menée (6) par l'intermédiaire d'un perçage (29), et la douille de montage (7) étant mise en place dans un élément d'étanchéité (10) élastique recevant l'arbre (1), lequel prend appui sur le boîtier d'arbre (2), caractérisé en ce qu'entre la région de périphérie extérieure de la plaque de recouvrement (13) et le boîtier en forme de cloche (3) est agencée une bague d'étanchéité (18) périphérique qui est réalisée d'une seule pièce avec l'organe d'étanchéité (10), le joint (32) formé par l'organe d'étanchéité (10) et par la bague d'étanchéité (18) centrant la douille de montage (7) de manière élastique.

2. Accessoire de travail selon la revendication 1, caractérisé en ce que l'organe d'étanchéité (10) et la bague d'étanchéité (18) périphérique sont reliés l'un à l'autre par l'intermédiaire d'un élément d'étanchéité (20) en forme de cloche.

3. Accessoire de travail selon la revendication 2, caractérisé en ce que des fentes (26, 27) sont réalisées sur l'élément d'étanchéité (20) en forme de cloche.

4. Accessoire de travail selon la revendication 3, caractérisé en ce que des extrémités (35) du boîtier d'arbre (2) s'engagent dans les fentes (26) et en ce que des montants d'appui (33) s'engagent dans les fentes (27).

5. Accessoire de travail selon la revendication 1, caractérisé en ce que la plaque de recouvrement (13) présente sur sa face intérieure un prolongement (14) en forme de tube qui s'engage dans un espace intermédiaire entre deux tronçons (16, 17) en forme de tube du joint (32).

6. Accessoire de travail selon la revendication 4, caractérisé en ce que les montants d'appui (33) servent de butée pour la plaque de butée (13).

7. Accessoire de travail selon la revendication 1, caractérisé en ce que la bague d'étanchéité périphérique est un joint torique (18).

8. Accessoire de travail selon la revendication 7, caractérisé en ce que le joint torique (18) présente un gorge d'étanchéité (19) périphérique sur son côté détourné de la plaque de recouvrement (13).

9. Accessoire de travail selon l'une ou l'autre des revendications 7 et 8, caractérisé en ce que le joint torique (18) repose dans une gorge périphérique (21) du boîtier en forme de cloche (3).

10. Accessoire de travail selon la revendication 1, caractérisé en ce que l'organe d'étanchéité (10) retient la douille de montage (7) de manière centrée en la serrant, en direction axiale de l'arbre (1).

11. Accessoire de travail selon la revendication 1, caractérisé en ce que l'organe d'étanchéité (10) présente sur sa face extérieure dans la région de la douille de montage (7) des barrettes (23) s'étendant axialement, lesquelles prennent appui sur la face intérieure du boîtier d'arbre (2).

12. Accessoire de travail selon la revendication 1, caractérisé en ce que le joint (32) est formé par un élastomère de polyester.
